## Europäisches Patentamt

## European Patent Office

## Office européen des brevets

(11) Veröffentlichungsnummer: **0 096 733**
**B1**

(12) # EUROPÄISCHE PATENTSCHRIFT

(45) Veröffentlichungstag der Patentschrift:
**12.08.87**

(21) Anmeldenummer: **83103112.5**

(22) Anmeldetag: **29.03.83**

(51) Int. Cl.⁴: **C 08 L 61/06,** C 08 L 61/20, C 08 L 5/14, D 21 H 1/40, D 21 H 1/04, B 32 B 29/00

(54) **Wässrige wärmehärtbare Massen auf Basis von Aldehyd-Kondensationsprodukten und deren Verwendung.**

(30) Priorität: **08.04.82 DE 3213159**

(43) Veröffentlichungstag der Anmeldung:
**28.12.83 Patentblatt 83/52**

(45) Bekanntmachung des Hinweises auf die Patenterteilung:
**12.08.87 Patentblatt 87/33**

(84) Benannte Vertragsstaaten:
**AT BE CH DE FR GB IT LI NL SE**

(56) Entgegenhaltungen:
**DE-A-2 732 993**
**US-A-2 943 013**
**US-A-3 025 250**

(73) Patentinhaber: **Stake Technology Ltd., 280 Wyecroft Road, Oakville Ontario L6A 3T8 (CA)**

(72) Erfinder: **Ayla, Cihan, Dr. Dipl.- Ing., Ekhofstrasse 39, D-2000 Hamburg 76 (DE)**
Erfinder: **Dietrichs, Hans- Hermann, Prof. Dr.Dipl.- Holzwirt, Verstorben (DE)**
Erfinder: **Puls, Jürgen, Dr. Dipl.- Holzwirt, Glinder Weg 7, D-2057 Reinbek (DE)**
Erfinder: **Sinner, Michael, Dr. Dipl.- Holzwirt, Asternweg 2, D-6500 Mainz (DE)**

(74) Vertreter: **Türk, Gille, Hrabal, Bruckner Strasse 20, D-4000 Düsseldorf 13 (DE)**

EP 0 096 733 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft wässrige wärmehärtbare Massen auf Basis von an sich bekannten wärmehärtbaren Kondensationsprodukten Aldehyden und OH- und/oder $NH_2$-Gruppen enthaltenden Verbindungen. Außerdem betrifft die Erfindung die Verwendung derartiger Massen zum Verleimen, zum Imprägnieren von Cellulosebahnen und zur Herstellung von Formteilen.

Härtbare Kondensationsprodukte aus Aldehyde und OH- und/ oder $NH_2$-Gruppen enthaltenden Verbindungen besitzen eine große technische Bedeutung. Es handelt sich hierbei um Vorkondensate, die gegebenenfalls Zusatzstoffe verschiedener Art enthalten und die für verschiedene Verwendungszwecke, insbesondere als Leime und als Imprägniermaterialien für Cellulosebahnen, aus denen dann Oberflächenbeschichtungen hergestellt werden, verwendet werden. Die Kondensationsprodukte sind vorzugsweise Phenol-, Resorcin-, Harnstoff- und Melamin-Formaldehyd-Harze. Sie werden in der Regel in Form von wässrigen Lösungen oder Emulsionen eingesetzt. Bei der Verwendung als Leim wird das Wasser von den zu verbindenden eine gewisse Saugfähigkeit aufweisenden Stoffen aufgesogen.

Bei der Verwendung als Imprägniermittel erfolgt in der Regel anschließend eine Trocknung, bevor die Härtung erfolgt. Die Härtung erfolgt bei erhöhter Temperatur. Die Kondensationsprodukte könnten je nach Verwendungszweck Katalysatoren enthalten, z.B. Alkali, Säuren und Metallsalze, Weichmacher, oberflächenaktive Substanzen sowie filmbildende Substanzen, z.B. Polyvinylalkohol oder Polyvinylacetat.

Als Füllstoffe kommen in Frage: Kokosnußschalenmehl, Borkenmehl, Walnußschalenmehl, Gesteinsmehle, Kreide, Holzmehl und andere übliche Füllstoffe.

Als Streckmittel können verwendet werden: Blutalbumin, Roggen-, Weizen-, Bohnen-, Kartoffelmehle u.a. übliche Streckmittel.

Durch den Zusatz dieser Mittel wird der Verbrauch der eigentlichen Leimharze herabgesetzt, die Zügigkeit der Leimflotten verbessert und das Leimharz in der Leimfuge zurückgehalten. Zu hohe Zusätze der Mittel setzen die Warmwasserbeständigkeit der Leimfugen herab.

In der DE-A-2 732 993 wird die Herstellung von Kohlenhydrat/Phenol-Resolharzen beschrieben, wobei als Kohlenhydrate Stärke, Dextrine, Rohstärke oder Mono-, Di- und Trisaccharide eingesetzt werden.

Es ist auch bekannt, daß aufgeschlossene, z.B. mit Alkali in in der Wärme behandelte Stärken oder zusätzlich modifizierte Stärken nach Zumischung zu duroplastischen Kunststoffen Leime ergeben, die hohe Festigkeiten der Leimfugen bei hoher Wasserfestigkeit ergeben. So werden nach dem GB-A 527 704 Leime hergestellt aus Melamin-Aldehyd-Kondensationsprodukten und Umwandlungsprodukten aus Stärke, die wasserlöslich sind oder mit kaltem Wasser angerührt eine Paste ergeben. Bei Anteilen von 70 - 89 % der modifizierten Stärke und 20 % Kunststoff zeigten die Leimfugen nach dem Heißpressen der Testproben hohe Festigkeiten und Wasserfestigkeit.

Bei Erhöhung des Anteils der modifizierten Stärke auf 90-95 % und entsprechender Erniedrigung des Kunststoffanteils auf 10 - 5 % wurden noch höhere Festigkeiten der Leimfugen festgestellt: bei Belastung brach nicht die Leimfuge, sondern das Holz. Die Wasserfestigkeit dieser Proben war jedoch geringer.

Nach US-A 2 275 314 werden z.B. aufgeschlossene Stärken - vorwiegend Cassawamehl, das im alkalischen Milieu in der Hitze aufgeschlossen ist - in bevorzugten Anteilen von 40 - 60 % -Harnstoff-Formaldehyd-Kondensaten zugesetzt. Die erhaltenen Leime zeigten nach dem Heißpressen gleiche oder verbesserte Trockenfestigkeiten und meist stark verbesserte Naßfestigkeiten im Vergleich zu Stärke und Caseinleimen, wie sie für die Holzverleimung verwendet werden.

Durch die Umsetzung von Saccharose mit Phenol und Formaldehyd in alkalischer Lösung können kochfeste Phenolharze erhalten werden, wobei etwa die Hälfte des Phenols durch Saccharose ersetzt wird (C.D. CHANG und O.K. KONONENKO, Adhesives Age, 1962, 36-40).

Nach CA-A 1 090 026 werden Phenol, Harnstoff und Kohlenhydrate, wie Dextrin oder Stärke, in saurem Bereich kondensiert. Die dadurch erhaltenen Produkte wurden mit handelsüblichen Füllstoffen und Härtern zu Preßmassen verarbeitet, die die Anforderungen nach ASTM D570-63 (6a) erfüllen. Außerdem wurden die Kondensate in alkalischem Bereich mit Formaldehyd weiter kondensiert, wobei die erhaltene Resole kochfeste Verleimungen lieferten.

Die vorstehend definierten Massen haben vorzügliche Eigenschaften hinsichtlich der Klebkraft, und sie bilden harte Oberflächen bei Verwendung als Überzugsmittel. Technisch und wirtschaftlich gesehen handelt es sich um verhältnismäßig wertvolle Produkte. Es besteht deshalb ein Bedürfnis danach, Massen zu schaffen auf Basis der bekannten Kondensationsprodukte, die zusätzlich andere härtbare Stoffe enthalten, die außerordentlich leicht verfügbar sind, physiologisch unbedenklich sind und die sonstigen Eigenschaften der genannten Kondensationsprodukte nicht oder nur unwesentlich nachteilig beeinflussen. Der vorliegenden Erfindung liegt die Aufgabenstellung zugrunde, derartige Massen zu schaffen.

Es wurde überraschenderweise gefunden, daß diese Aufgabenstellung dadurch gelöst werden kann, daß die Massen bestimmte Hemicellulosespaltprodukte enthalten.

Gegenstand der vorliegenden Erfindung sind demgemäß wässrige wärmehärtbare Massen auf Basis von an sich bekannten wärmehärtbaren Kondensationsprodukten aus Aldehyden und OH- und/ oder $NH_2$-Gruppen enthaltenden Verbindungen, dadurch gekennzeichnet, daß sie Hemicellulosespaltprodukte mit einem Durchschnittspolymerisationsgrad DP von 5 bis 100 in einer Menge von mindestens 10 Gew.-%, bezogen auf das Gesamtgewicht der wärmehärtbaren Stoffe, sowie Aldehyde in einer Menge von 5 bis 50 Gew.-%, bezogen auf das Gewicht der Hemicellulosenspaltprodukte, enthalten.

2

Als härtbare Kondensationsprodukte können im Sinne der Erfindung die oben definierten bekannten Produkte verwendet werden.

Es können ebenfalls die an sich bekannten Katalysatoren, Füllstoffe, Streckmittel und dergleichen eingesetzt werden.

Wie bereits ausgeführt, enthalten die Massen gemäß der Erfindung mindestens 10 Gew.-%, bezogen auf das Gesamtgewicht der wärmehärtbaren Stoffe, die oben definierten Hemicellulosespaltprodukte. Die obere Grenze wird durch die gewünschte Klebkraft der Massen bestimmt. Je nach der natürlichen Herkunft der Hemicellulosespaltprodukte, d.h. der pflanzlichen Rohstoffe, aus denen die Hemicellulosespaltprodukte gewonnen werden, kann die obere Grenze schwanken. Sie liegt in manchen Fällen bei 90 Gew.-%. In anderen Fällen kann sie jedoch etwas niedriger liegen. Durch einfache Mischungen und Feststellung der Klebkraft kann die jeweilige obere Grenze leicht ermittelt werden. In der Regel sind Massen, bei denen die Menge der Hemicellulosespaltprodukte bis zu 80 Gew.-%, vorzugsweise bis zu etwa 70 Gew.-% beträgt, noch ausgezeichnet brauchbar und besitzen eine Klebkraft, die den technischen Anforderungen voll genügt. Die untere Grenze für die Menge an Hemicellulosespaltprodukten liegt vorzugsweise bei 25 Gew.-%. Dadurch kann die Menge an Phenolharzen und dergleichen beträchtlich vermindert werden.

Der Durchschnittspolymerisationsgrad DP beträgt zweckmäßig mindestens 10, vorzugsweise mindestens 15. Die obere Grenze liegt zweckmäßig bei 70, vorzugsweise bei 30.

Hemicellulosespaltprodukte im Sinne der vorliegenden Erfindung sind die Produkte, die durch teilweisen Abbau der Hemicellulosen erhalten werden. Bevorzugt sind also Massen, die dadurch gekennzeichnet sind, daß sie die Hemicellulosespaltprodukte in Form von wässrigen Lösungen enthalten, die erhalten worden sind durch thermischen Abbau von pflanzlichen, Hemicellulose enthaltenden, Rohstoffen und Abtrennung der Faserstoffe von der wässrigen Aufschlußlösung. Hinsichtlich der Verfahren zur Herstellung solcher Lösungen wird auf die weiter unten genannten Patentschriften beispielsweise verwiesen.

Hemicellulosen sind als Bestandteile der Zellwände im Pflanzenreich weit verbreitet. Nach der Cellulose stellen diese Polysaccharide die auf der Erde am häufigsten vorkommenden organischen Naturstoffe dar. Zu den Hemicellulosen zählen die Xylane, deren lineare Hauptketten aus Xyloseresten zusammengesetzt sind und die Glucomannane, deren Hauptketten aus Mannose- und Glucoseresten bestehen. Manche Autoren rechnen zu dem Hemicellulosen auch Pectine oder pectinähnliche Stoffe, deren verzweigte Makromoleküle im wesentlichen aus Arabinose-, Glactose- und Galacturonsäureresten aufgebaut sind.

Die 0-Acetyl-4-0-Methylglucuronoxylane der Laubhölzer sind stark acetyliert und enthalten als Seitenketten 4-0-Methyl-glucuronsäurereste; ihr Anteil im Holz beträgt 10-35 %. Die Arabino-4-0-methylglucuronoxylane der Nadelhölzer besitzen höhere Anteile der 4-0-Methylglucuronsäure und zusätzlich Arabinoreste als Seitenketten. Der Anteil dieser Xylane im Nadelholz kann mit 8 bis 12 % beziffert werden.

Arabino-4-0-methylglucuronoxylane mit meist niedrigeren Anteilen an 4-0-Methylglucuronsäure und höheren Anteilen Arabinose finden sich in stark wechselnden, teilweise sehr großen Mengen in vielen Einjahrespflanzen.

Die Anteile der Glucomannane in den Laubhölzern sind mit etwa 3 bis 5 % gering. Die Galactoglucomannane der Nadelhölzer, die verschiedenen Anteile von Galactoseresten als Seitenketten enthalten, kommen dagegen in Mengen von 15 bis 25 % im Holz vor. Der Gehalt an Glucomannanen in Einjahrespflanzen ist wiederum sehr wechselhaft.

Xylane und Mannane von Laub- und Nadelhölzern weisen durchschnittliche Polymerisationsgrade (DP) zwischen 100 und 200 auf. Bei Einjahrespflanzen liegen die durchschnittlichen DP-Werte für Xylane im gleichen Bereich, bei Mannanen zum Teil unter 100, oder auch wesentlich über 200. Pectine und pectinähnliche Substanzen weisen sehr unterschiedliche, aber in der Regel wesentlich höhere DP-Werte auf als Xylane und Mannane. Sie sind jedoch im Vergleich zu Xylanen und Mannanen hydrolytisch leicht spaltbar und der DP wird daher bei der Isolierung aus den pflanzlichen Rohstoffen oft wesentlich erniedrigt.

Hemicellulosenspaltprodukte im Sinne der vorliegenden Erfindung sind somit in großen Mengen aus pflanzlichen Rohstoffen erhältlich. Verfahren zur Herstellung derartiger Hemicellulosenspaltprodukte sind beispielsweise beschrieben in DE-A-27 32 327 (Dampf-Druck-Verfahren) und DE-A-27 37 118 (Organosolv-Verfahren).

Nach diesen Verfahren können neben weitgehend reinen Hemicellulosen-Spaltprodukten auch Gemische aus Hemicellulosen und Spaltprodukten von aromatischen Polymeren, vor allem von Ligninen und Gerbstoffen, gewonnen werden, bei dem in DE-A 27 32 327 beschriebenen Dampf-Druck-Extraktionsverfahren durch Extraktion des mit Dampf aufgeschlossenen Faserstoffes mit Lauge und bei dem Organosolvverfahren entsprechend DE-A 27 37 118, wenn keine Trennung der Kohlenhydrate von Ligninen in den Aufschlußlösungen erfolgt. Die oben bereits erwähnten Xylanspaltprodukte sowie die nach den genannten Verfahren gleichzeitig erhaltenen Aromaten haben deshalb wirtschaftlich besonders große Bedeutung, weil sie in außerordentlich großen Mengen aus pflanzlichen Rohstoffen der verschiedensten Art erhältlich sind, z.B. Laubhölzern und Einjahrespflanzen. Diese Rohstoffe sind überall auf der Erde in großen Mengen verfügbar und wachsen ständig nach.

Die oben definierte obere Grenze des DP ist deshalb wichtig, weil die hochmolekulare Kohlenhydrate kolloidale, hochviskose Lösungen mit meist pseudoplastischem Fließverhalten ergeben, die die Herstellung von erfindungsgemäßen wärmehärtbaren Massen erschweren. So z.B. kann die Molekularmasse frisch extrahierter Pectine im Mittel etwa 100.000 betragen (W. PILNIK et.al. Ullmann, Band 19, S.233-263).

Die oben definierte untere DP-Grenze ist deswegen wichtig, weil niederoligomere und ganz besonders monomere Spaltprodukte, z.B. bei Xylanspaltprodukten die Xylose, die Eigenschaften der wärmehärtbaren Massen negativ beeinflussen. Überraschenderweise wurde allerdings gefunden, daß bei ausreichendem DP die Anwesenheit von monomeren Spaltprodukten sowie von anderen niedermolekularen Verunreinigung nicht stört.

Die Aldehyde liegen zweckmäßig in einer Menge von weniger als 20 Gew.-%, mindestens aber 5 Gew.-%, bezogen auf das Gewicht der Hemicellulosespaltprodukte vor. Vorzugsweise beträgt die Menge der Aldehyde höchstens etwa 40, besonders bevorzugt höchstens etwa 35 Gew.-%. Als Aldehyde im Sinne der Erfindung ist Formaldehyd bzw. Paraformaldehyd insbesondere deshalb bevorzugt, weil er leicht zugänglich und billig ist, wie dies auch für die oben definierten Kondensationsprodukte des Stands der Technik gilt. Furfurol ist deshalb geeignet, weil es bekanntlich aus landwirtschaftlichen und forstwirtschaftlichen Abfallprodukten wie Haferspelzen, Maiskolben, Reisschalen, Erdnußschalen und Holz gewonnen werden kann, was hinsichtlich der Unabhängigkeit von Erdöl für einige Länder von großer Bedeutung ist.

Als Alkali wird bevorzugt Natriumhydroxyd verwendet. Es können aber auch z.B. Kaliumhydroxid und/oder Ammoniak und/oder Amine eingesetzt werden. Die Menge als Alkali beträgt zweckmäßig bis zu 20 Gew.-%, bezogen auf die härtbaren Stoffe.

Die definierten Massen besitzen besonders vorteilhafte Eigenschaften. Die Hemicellulosespaltprodukte und Aromaten enthaltenden Lösungen, die bei der Herstellung von erfindungsgemäßen Massen eingesetzt werden, sind außerordentlich leicht und ohne Zusatz von giftigen Chemikalien zu gewinnen (vgl. DE-A-27 32 327). Sie basieren auf Rohstoffen, die ständig nachwachsen. Vor allem aber werden größere Mengen an giftigen Chemikalien, die bei der Herstellung von solchen Massen üblicherweise verwendet werden, durch natürliche Stoffe ersetzt, die nicht auf immer knapper werdendem Erdöl basieren.

Die erfindungsgemäßen Leime besitzen überraschenderweise noch bessere Klebrigkeit (Tack) als bei den reinen Kondensationsprodukten, die für bestimmte Transport-Systeme in der Holzwerkstoffherstellung besonders vorteilhaft ist. Ein wesentlicher Vorteil der erfindungsgemäßen wärmehärtbaren Massen gegenüber Phenolharzen besteht in der Farbe. Phenolharze sind dunkelbraun gefärbt. Sie können daher aus optischen Gründen oft nicht eingesetzt werden, z.B. stört die dunkle Farbe bei der Verleimung heller Hölzer. Die erfindungsgemäßen Massen weisen eine gelblich bis hellbraune Tönung auf. Daher sind auch bei hellen Hölzern die Leimfugen kaum erkennbar, und bei dünnen Furnieren kann das gefürchtete dunkle Durchschlagen des Leims durch die Holzporen, wie bei üblichen Phenolharzen bekannt, nicht auftreten.

## Beispiel 1

Weizenstroh wurde für 20 Min. bei 180°C nach dem Dampf-Druck-Verfahren in einer Pilotanlage mit einem Durchsatz von rund 350 kg/h aufgeschlossen, zerfasert und der erhaltene Faserstoff mit heißem Wasser gewaschen. Durch diese Behandlung wurden 23,4 % der Holzbestandteile gelöst. 9,3 % waren Kohlenhydrate, 5,7 % waren Xylane und Xylanspaltprodukte (alle bezogen auf eingesetztes atro Material). Der Nichtkohlenhydratanteil besteht aus: Inhaltsstoffen, Ligninbruchstücken, Essigsäure und Kohlenhydratabbauprodukten. Die Lösung wurde in einem Vakuumrotationsverdampfer eingeengt bis auf einen Feststoffgehalt der gelösten Holzbestandteile von 66 Gew.-% = Lösung A. Lösung B war ein handelsübliches alkalisches Phenolharz (Kauresin 240, BASF, eingetragenes Warenzeichen) mit einem Feststoffgehalt von 48 Gew.-%. Aus diesen Lösungen wurden mehrere Leimflotten im Gewichtsverhältnis A zu B von 75 : 25, 50 : 50 und 25 : 75 hergestellt. Somit enthält 100 g Leimflotte 49,5 g Extrakt, 12 g Phenolharz, 38,5 g Wasser bzw. 33 g Extrakt, 24 g Phenolharz, 43 g Wasser bzw. 16 g Extrakt, 36 g Phenolharz, 47,5 g Wasser. Zu je 100 g jeder Leimflotte wurde als Füllstoff 5 g Kokosnußschalenmehl (MS 300) und als Härter 5 g Paraformaldehyd zugesetzt. Die gut gemischten Leimflotten wurden auf 5 mm dicke Buchenbrettchen (Ausgleichsfeuchtigkeit 12% nach Klimatisierung bei 20°C und 65% relativer Luftfeuchtigkeit) aufgetragen. Die Leimauftragsmenge betrug 200 g/m². Beim Vorpressen wurde ein Druck von 0,98 N/mm² verwendet. Anschließend wurden die Brettchen 10 Minuten bei einer Heißplattentemperatur von 150°C bei 1.47 N/mm² verpreßt.

Die Verleimung erfolgte nach DIN 53254, die Prüfung der Verleimungen nach DIN 68602, Beanspruchungsgruppen $B_1$ und $B_4$. Die Ergebnisse sind nachfolgend dargestellt.

**Tabelle 1**

| Beispiel | Mischungs-verhältnis | | Bindefestigkeit | |
|---|---|---|---|---|
| | | | Nach Klimatisierung | Nach 6 Std. Kochen |
| 1 | Lösung A | Lösung B | $N/mm^2$ | $N/mm^2$ |
| a | 75 | 25 | 11,7 | 4,5 |
| b | 50 | 50 | 13,9 | 5,4 |
| c | 25 | 75 | 17,1 | 9,0 |
| | Mindestanforderung nach DIN 68602 | | 10,0 | 4,0 |

Die Bindefestigkeitswerte, die über 10- bzw. 4 N/mm2 liegen, geben in der Regel die jeweiligen Eigenfestigkeitswerte des Holzes wieder, die sich je nach Schnittrichtung, Faserverlauf usw. mehr oder weniger ändern. Deshalb sind alle Festigkeiten, die über 10 bzw. 4 N/mm2 liegen, als gleich gut zu betrachten.

**Beispiel 2**

Birkenholz wurde für 30 Min. bei 187°C nach dem Dampf-Druck-Verfahren aufgeschlossen, zerfasert und der erhaltene Faserstoff mit heißem Wasser gewaschen. Durch diese Behandlung wurden 31 % der Holzbestandteile gelöst. 14,3 % waren Kohlenhydrate, 11,2 % waren Xylane und Xylanspaltprodukte (alle bez. auf eingesetztes atro Material). Die Lösung wurde eingeengt bis auf einen Feststoffgehalt der gelösten Holzbestandteile von 58,1 Gew.-%. Durch Zugabe von Natriumhydroxyd wurde die Lösung so eingestellt, daß sie 10 Gew.-% Alkali enthielt = Lösung A.

Lösung B war ein handelsübliches Phenolharz (Kauresin 260, BASF, eingetragenes Warenzeichen) mit einem Feststoffgehalt von 48 Gew.-%.

Aus diesen Lösungen wurden mehrere Leimflotten mit den in der Tabelle 2 angegebenen Mischungsverhältnissen (Gewichte der Lösungen) hergestellt. Als Vergleichslösung diente Lösung B.

Zu je 100 g jeder Leimflotte wurden als Füllstoff 10 g Kokosnußschalenmehl (MS 300) und als Härter 10 g Paraformaldehyd zugesetzt. Die gut gemischten Leimflotten wurden wie im Beispiel 1 beschrieben auf 5 mm dicke Buchenbrettchen aufgetragen, das Vorpressen und die Prüfung erfolgte ebenso wie in Beispiel 1.

Die Ergebnisse sind nachfolgend dargestellt.

**Tabelle 2**

| Beispiel | Mischungs-verhältnis | | Bindefestigkeit | |
|---|---|---|---|---|
| 2 | | | Nach Klimati-sierung | Nach 6 Std. Kochen |
| | Lösung A | Lösung B | $N/mm^2$ | $N/mm^2$ |
| a | 70 | 30 | 16,0 | 7,1 |
| b | 50 | 50 | 12,6 | 5,9 |
| c | 0 | 100 | 12,2 | 7,1 |
| Mindestanforderung nach DIN 68602 | | | 10,0 | 4,0 |

**Beispiel 3**

In jeweils 100 g 10 %iger wässriger Natriumhydroxyd-Lösung wurden gelöst:
$A_1$: 100 g Xylose
$A_2$: 5 g Xylan und 95 g Xylose
$A_3$: 10 g Xylan und 90 g Xylose
$A_4$: 20 g Xylan und 80 g Xylose
$A_5$: 30 g Xylan und 70 g Xylose
$A_6$: 40 g Xylan und 60 g Xylose

Das Xylan war ein aus Rotbuchenholz gewonnenes Präparat; seine Darstellung ist beschrieben bei M. Sinner, H.H. Dietrichs und M.H. Simatupang, Holzforschung, 26 (1972), 218-228. Den Lösungen $A_1$ bis $A_6$ wurden jeweils 60 g eines handelsüblichen Phenolharzes mit einem Feststoffgehalt von 48 % zugesetzt sowie 10 g Kokosnußschalenmehl (MS 300) und 10 g Paraformaldehyd. Die Verleimung und anschließende Prüfung erfolgte wie in Beispiel 1 beschrieben. Die Ergebnisse sind nachfolgend dargestellt.

**Tabelle 3**

| Mischungsver-hältnis | | Bindefestigkeit nach Klimatisierung |
|---|---|---|
| Xylan | Xylose | $N/mm^2$ |
| 0 | 100 | 4,4 |
| 5 | 95 | 6,6 |
| 10 | 90 | 7,9 |
| 20 | 80 | 8,7 |
| 30 | 70 | 9,6 |
| 40 | 60 | 11,4 |

Mindestanforderung nach DIN 68802 für die Trockenbindefestigkeit ist 10 N/mm².

Aus den Bindefestigkeiten ist deutlich zu ersehen, daß sie mit zunehmendem Xylan-Anteil, bzw. mit zunehmendem DP größer werden, oder anders ausgedrückt: die Xylose stört, wie dies von anderen Zuckern bekannt ist, die Verleimung. So ist z.B. in der Literatur beschrieben, daß den alkalischen Phenolharzen höchstens 7 % Saccharose zugegeben werden kann, ohne die Bindefestigkeit der Verleimungen negativ zu beeinflussen (C.D. CHANG und O.K. KONONENKO, Adhesives Age, 1962, 36-40). Andererseits können bei direkter Kondensation von Phenol, Formaldehyd und Saccharose bis zu 50 % des Phenols durch Saccharose ersetzt werden, weil in diesem Fall die Saccharose in der Leimfuge nicht mehr als monomer sondern in chemisch gebundener Form vorliegt.

**Beispiel 4**

Als Lösung A diente der in Beispiel 1 beschriebene Extrakt aus Dampf-Druck-behandeltem Weizenstroh. Lösung B war ein Phenolharz (Kauresin 260, BASF, eingetragenes Warenzeichen) mit einem Festgehalt von 48 %.

50 g jeder Lösung wurden gemischt und als Füllstoff 5 g Kokosnußschalenmehl, als Härter 5 g Paraformaldehyd und 5 g Polyvinylacetat (Mowilith Pulver D, Hoechst, eingetragenes Warenzeichen) als filmbildende Substanz zugesetzt. Die Verleimung und anschließende Prüfung erfolgte wie in Beispiel 1 beschrieben; nur die Preßtemperatur betrug hier 130°C. Die Bindefestigkeit nach Klimatisierung betrug 10,7 N/mm², nach 6 Std. Kochen 4,6 N/mm².

**Beispiel 5**

Als Leimflotte diente die in Beispiel 4 beschriebene Lösung. Zu 100 g Leimflotte wurden als Füllstoff 5 g Kokosnußschalenmehl und als Härter 5 g Epichlorhydrin zugesetzt.

Die Bindefestigkeit nach Klimatisierung betrug 11,0 N/mm² nach 6 Std. Kochen 5,2 N/mm².

**Beispiel 6**

Als Lösung A diente der in Beispiel 1 beschriebene Extrakt aus Dampf-Druck-behandeltem Weizenstroh. 80 g Lösung A und 20 g reines Melamin wurden gut gemischt und als Härter 5 g Paraformaldehyd und als Füllstoff 5 g Kokosnußschalenmehl zugesetzt. Die Verleimung und anschließende Prüfung erfolgte wie in Beispiel 4 beschrieben.

Die Bindefestigkeit nach Klimatisierung betrug 11,4 N/mm², nach 6 Std. Kochen 5,6 N/mm².

**Beispiel 7**

Birkenholz wurde für 20 Min. bei 185°C nach dem Dampf-Druck-Verfahren in einer Pilotanlage mit einem Durchsatz von 240 kg/h aufgeschlossen, zerfasert und der erhaltene Faserstoff mit heißem Wasser gewaschen.

Durch diese Behandlung wurden 12,6 % der Holzbestandteile gelöst. 7,6 % waren Kohlenhydrate, 5,3 % waren Xylane und Xylanspaltprodukte (alle bez. auf eingesetztes atro Material). Die Lösung wurde gefriergetrocknet. Gefriergetrocknetes Material wurde in 10 %ige wässrige Natronlauge in einer Menge eingerührt, daß eine 60 %ige Lösung erhalten wurde = Lösung A. Lösung B war ein handelsübliches alkalisches Phenolharz (Kauresin 260, BASF, eingetragenes Warenzeichen).

Aus diesen Lösungen wurde eine Leimflotte im Gewichtsverhältnis A zu B 50 : 50 hergestellt. Zu dieser Leimflotte wurden als Füllstoff 5 g Kokosnußschalenmehl und als Härter 10 g Furfurol zugesetzt. Die Verleimung und Prüfungen erfolgten wie in Beispiel 1 beschrieben. Die Bindefestigkeit nach Klimatisierung betrug 10,8 N/mm² nach 6 Std. Kochen 4,2 N/mm².

**Beispiel 8**

Birkenholz (1443 g berechnet atro) wurde für 40 Min. bei 187°C nach dem Dampf-Druck-Verfahren aufgeschlossen, zerfasert und der erhaltene Faserstoff in 38 l 0,4 %iger wäßriger NaOH bei Raumtemperatur suspendiert und durch Filtration und Abpressen vom alkalischen Auszug abgetrennt. Nach Abpressen betrug die Ausbeute am Faserstoff 47,8 bezogen auf das eingesetzte Holz (atro). Die Lösung wurde unter Vakuum bei 55°C bis auf einen Feststoffgehalt von 41% eingeengt = Lösung A.

Lösung B war ein Phenolharz (Kauresin 260, eingetragenes Warenzeichen) mit einem Festgehalt von 48 %. Zu 100 g Leimflotte wurden als Füllstoff 5 g Kokosnußschalenmehl und als Härter 5 g Paraformaldehyd zugesetzt.

Die Verleimung und anschließende Prüfung erfolgte wie in Beispiel 1 beschrieben. Die Ergebnisse sind nachfolgend dargestellt.

**Tabelle 4**

| Mischungsverhältnis | | Bindefestigkeit | |
|---|---|---|---|
| | | Nach Klima-tisierung | Nach 6 Std. Kochen |
| Lösung A | Lösung B | $N/mm^2$ | $N/mm^2$ |
| 75 | 25 | 10,2 | 4,4 |
| 50 | 50 | 12,4 | 4,3 |

**Beispiel 9**

Birkenholz wurde für 20 Min. bei 187°C nach dem Dampf-Druck-Verfahren aufgeschlossen, zerfasert und der erhaltene Faserstoff mit heißem Wasser gewaschen; 28 % der Holzbestandteile gingen in Lösung. Der Anteil der Kohlenhydrate betrug 60 %. Die Lösung wurde gefriergetrocknet. Aus dem gefriergetrockneten Extrakt wurde eine 5 %ige Lösung hergestellt und an einem Ultrafiltrationsgerät der Firma Amicon, Lexington, ultrafiltriert, wobei 14,5 % der Lösung ultrafiltriert und 85,5 % zurückgehalten wurden.

Ultrafiltrat-, Überstand- und Originallösungen wurden eingeengt bis auf einen Feststoffgehalt von jeweils 55 %. Aus der Ultrafiltrat-Lösung = Lösung A, Überstandlösung = Lösung B, Originallösung = Lösung C, und dem Phenolharz. (Kauresin 260, eingetragenes Warenzeichen) = Lösung D, wurden Leimflotten im Gewichtsverhältnis A zu D 75 : 25, B zu D 75 : 25 und C zu D 75 : 25 hergestellt.

Zu je 100 g jeder Leimflotte wurden als Füllstoff 10 g Kokosnußschalenmehl (ms 300) und als Härter 10 g Paraformaldehyd zugesetzt. Die Verleimung und anschließende Prüfung erfolgte wie in Beispiel 1. Die Ergebnisse sind nachfolgend dargestellt.

**Tabelle 5**

| Mischungsverhältnis | | | | Bindefestigkeit | |
|---|---|---|---|---|---|
| | | | | Nach Klima-tisierung | Nach 6 Std. Kochen |
| Lösung A | Lösung B | Lösung c | LösungD | $N/mm^2$ | $N/mm^2$ |
| 75 | – | – | 25 | 0 | 0 |
| – | 75 | – | 25 | 11,9 | 4,1 |
| – | – | 75 | 25 | 12,7 | 4,0 |

Aus den Ergebnissen ist zu ersehen, daß offensichtlich nur aus niedermolekularen Holzkomponenten keine erfolgreiche Verleimung durchführbar ist. Die im Gesamtextrakt enthaltene niedermolekulare Holzkomponente stören aber die Verleimung nicht signifikant, wenn sie zusammen mit den höher molekularen Bestandteilen verleimt werden.

**Beispiel 10**

Birkenholz (582,9 g atro) wurde für 20 Min. bei 187°C nach dem Dampf-Druck-Verfahren aufgeschlossen, zerfasert und der erhaltene Faserstoff in 9,5 l 0,4 %iger wäßriger NaOH bei Raumtemperatur suspendiert und durch Filtration und Abpressen vom alkalischen Auszug abgetrennt. Nach Abpressen betrug die Ausbeute am Faserstoff 49,5 %, bezogen auf das eingesetzte Holz (atro). Die Lösung wurde unter Vakuum bei 55°C bis auf einen Feststoffgehalt von 41,3 Gew.-% eingeengt = Lösung A. Lösung B war ein Phenolharz (Kauresin 240, BASF, eingetrages Warenzeichen) mit einem Festgehalt von 48 %. Zu 100 g Leimflotte wurden als Füllstoff 5 g Kokosnußschalenmehl und als Härter 5 g Paraformaldehyd zugesetzt. Die Verleimung und anschließende Prüfung erfolgte wie in Beispiel 1 beschrieben. Die Ergebnisse sind nachfolgend dargestellt.

**Tabelle 6**

| Mischungsverhältnis | | Bindefestigkeit | |
|---|---|---|---|
| | | Nach Klima-tisierung | Nach 6 Std. Kochen |
| Lösung A | Lösung B | $N/mm^2$ | $N/mm^2$ |
| 75 | 25 | 10,4 | 4,0 |

**Beispiel 11**

Birkenholz (629,9 g atro) wurde für 20 Min. bei 187°C nach dem Dampf-Druck-Verfahren aufgeschlossen, zerfasert und der erhaltene Faserstoff mit heißem Wasser gewaschen. 23 % der Holzbestandteile gingen in Lösung. Der Faserstoff wurde durch Abpressen vom wäßrigen Auszug abgetrennt. Der erhaltene Faserstoff wurde in 11,4 l 0,4 %iger wäßriger NaOH bei Raumtemperatur suspendiert und durch Filtration und Abpressen vom alkalischen Auszug abgetrennt. Nach Abpressen betrug die Ausbeute am Faserstoff 46 %, bezogen auf das eingesetzte Holz (atro). Die alkalische Lösung wurde unter Vakuum bei 55°C bis auf einen Feststoffgehalt von 60 % eingeengt = Lösung A. Lösung B war ein Phenolharz (Kauresin 240, BASF, eingetragenes Warenzeichen) mit einem Festgehalt von 48 %. Zu 100 g Leimflotte wurden als Füllstoff 5 g Kokosnußschalenmehl und als Härter 5 g Paraformaldehyd zugesetzt. Die Verleimung und anschließende Prüfung erfolgte wie in Beispiei 1 beschrieben. Die Ergebnisse sind nachfolgend dargestellt.

9

**Tabelle 7**

| Mischungsverhältnis (Gewichtsteile) | | Bindefestigkeit | |
|---|---|---|---|
| | | Nach Klimatisierung | Nach 6 Std. Kochen |
| Lösung A | Lösung B | N/mm$^2$ | N/mm$^2$ |
| 75 | 25 | 10,6 | 4,5 |
| 50 | 50 | 11,6 | 4,3 |

**Beispiel 12**

Kettenlängenverteilung der extrahierten Xylane

Weizenstroh wurde für 20 Min. bei 180°C dampfdruckbehandelt und mit Wasser extrahiert. Der wäßrige Extrakt wurde gefriergetrocknet.

0,9 mg des Lyophilisats, in 0,18 ml Wasser gelöst, dienten zum Nachweis der Kettenlängenverteilung durch Gelchromatographie. Die wichtigsten methodischen Einzelheiten sind in der folgenden Tabelle zusammengestellt:

Stationäre Phase: Biogel (eingetrages Warenzeichen) P 4 200 - 400 mesh, Korngröße: 0,037 bis 0,076 mm

Mobile Phase: McIvaine (Na$_2$HPO$_4$/Citronensäure), Puffer pH 7,8

Säulendurchmesser: 1,5 cm

Säulenhöhe: 96 cm

Elutionsgeschwindigkeit: 0,36 ml/min

Temperatur: 30°C

Der Nachweis der Zucker im Eluat wurde mit einem Technicon-Gerät (eingetragenes Warenzeichen) unter Verwendung von 0,1 % Orcin in 70 % H$_2$SO$_4$ durchgeführt. Das Säuleneluat (0,36 ml) wurde mit Luft (0,36 ml) und Nachweisreagenz (1,25 ml) zusammengeführt und bei 95°C inkubiert. Die Messung der Extinktion erfolgte in einer Durchflußküvette von 10 mm Länge bei 420 nm.

Im Chromatogramm sind die Xylooligomeren bis Polymerisationsgrad 10 deutlich zu unterscheiden. Da das verwendete Gel ein Ausschlußvolumen von Molekulargewicht 4000 besitzt, folgt darauf, daß die detektierten Xylanbruchstücke im Ausschlußvolumen einen Polymerisationsgrad von ca. 26 oder mehr besitzen.

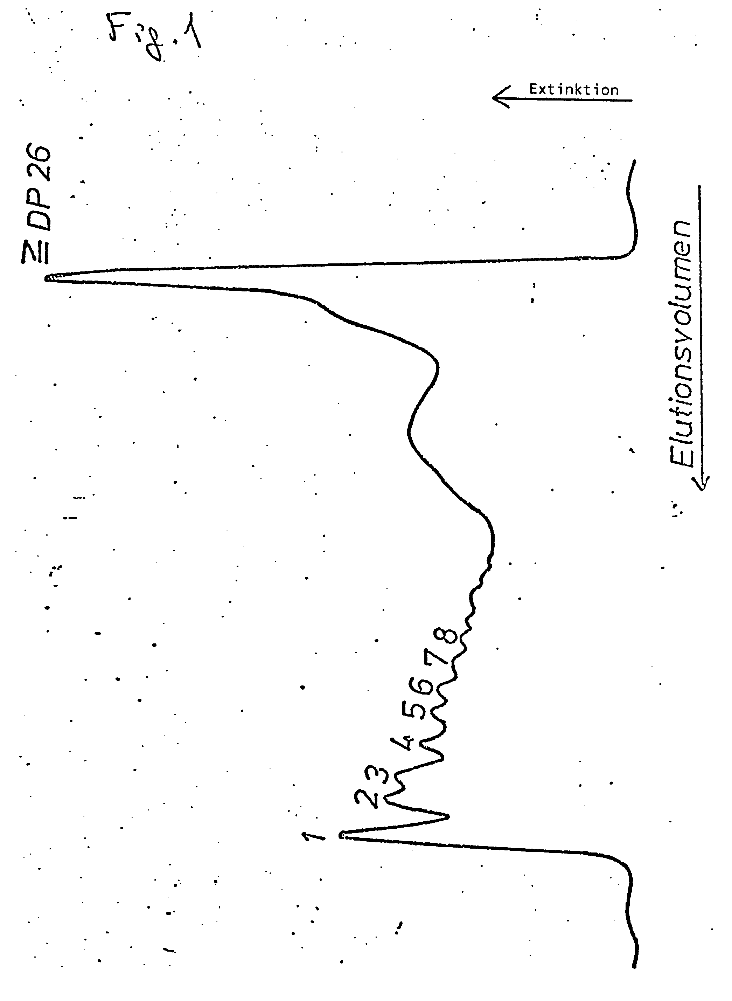

**Patentansprüche**

1. Wässrige wärmehärtbare Massen auf Basis von an sich bekannten wärmehärtbaren Kondensationsprodukten aus Aldehyden und OH- und/oder NH$_2$-Gruppen enthaltenden Verbindungen, dadurch gekennzeichnet, daß sie Hemicellulosespaltprodukte mit einem Durchschnittspolymerisationsgrad DP von 5 bis 100 in einer Menge von mindestens 10 Gew.-%, bezogen auf das Gesamtgewicht der wärmehärtbaren Stoffe, sowie Aldehyde in einer Menge von 5 bis 50 Gew.-%, bezogen auf das Gewicht der Hemicellulosespaltprodukte, enthalten.

2. Massen nach Anspruch 1, dadurch gekennzeichnet, daß sie als Hemicellulosespaltprodukte Xylanspaltprodukte enthalten.

3. Massen nach Anspruch 1 oder 2, dadurch gekennzeichnet, daß sie als Hemicellulosespaltprodukte Mannanspaltprodukte enthalten.

4. Massen nach einem oder mehreren der Ansprüche 1 bis 3, dadurch gekennzeichnet, daß der Durchschnittspolymerisationsgrad DP mindestens 10, vorzugsweise mindestens 15 beträgt.

5. Masse nach einem oder mehreren der Ansprüche 1 bis 4, dadurch gekennzeichnet, daß der Durchschnittspolymerisationsgrad DP höchstens 70, vorzugsweise höchstens 30 beträgt.

6. Masse nach einem oder mehreren der Ansprüche 1 bis 5, dadurch gekennzeichnet, daß die Hemicellulosespaltprodukte in einer Menge von mindestens 25 Gew.-%, bezogen auf das Gesamtgewicht der wärmehärtbaren Stoffe, vorliegen.

7. Masse nach einem oder mehreren der Ansprüche 1 bis 6, dadurch gekennzeichnet, daß die Hemicelluloseskaltprodukte in einer Menge von höchstens 90 Gew.-% vorliegen.

8. Massen nach einem oder mehreren der Ansprüche 1 bis 6, dadurch gekennzeichnet, daß sie die Hemicellulosespaltprodukte in Form von wässrigen Lösungen enthalten, die erhalten worden sind durch thermischen Abbau von pflanzlichen, Hemicellulose enthaltenden, Rohstoffen und Abtrennung der Faserstoffe von der wässrigen Aufschlußlösung.

9. Masse nach einem oder mehreren der Ansprüche 1 bis 8, dadurch gekennzeichnet, daß sie als Aldehyd Formaldehyd oder Paraformaldehyd enthält.

10. Masse nach einem oder mehreren der Ansprüche 1 bis 8, dadurch gekennzeichnet, daß sie als Aldehyd Furfurol enthält.

11. Masse nach einem oder mehreren der Ansprüche 1 bis 10, dadurch gekennzeichnet, daß die Aldehyde in einer Menge von weniger als 20 Gew.-%, mindestens aber 5 Gew.-%, bezogen auf das Gewicht der Hemicellulosespaltprodukte, vorliegen.

12. Masse nach einem oder mehreren der Ansprüche 1 bis 10, dadurch gekennzeichnet, daß die Aldehyde in einer Menge von höchstens etwa 40, vorzugsweise höchstens etwa 35 Gew.-%, bezogen auf das Gewicht der Hemicellulosespaltprodukte, vorliegen.

13. Masse nach einem oder mehreren der Ansprüche 1 bis 12, dadurch gekennzeichnet, daß sie zusätzlich Alkali in einer Menge von bis zu 20 Gew.-%, bezogen auf die härtbaren Stoffe enthält.

14. Verwendung von Massen nach einem oder mehreren der Ansprüche 1 bis 12 zum Verleimen.

15. Verwendung von Massen nach Ansprüchen 1 bis 13 zum Imprägnieren von Cellulosebahnen und zur Herstellung von Formteilen.

## Claims

1. Aqueous thermosetting compositions based on thermosetting condensates known per se of aldehydes and compounds containing OH and/or $NH_2$ groups, characterized in that they contain hemicellulose degradation products having an average degree of polymerization DP of from 5 to 100 in a quantity of at least 10 % by weight, based on the total weight of the thermosetting composition, and aldehydes in a quantity of from 5 to 50 % by weight, based on the weight of the hemicellulose degradation products.

2. Compositions as claimed in Claim 1, characterized in that they contain xylan degradation products as the hemicellulose degradation products.

3. Compositions as claimed in Claim 1 or 2, characterized in that they contain mannan degradation products as the hemicellulose degradation products.

4. Compositions as claimed in one or more of Claims 1 to 3, characterized in that the average degree of polymerization DP is at least 10 and preferably at least 15.

5. Compositions as claimed in one or more of Claims 1 to 4, characterized in that the average degree of polymerization DP is at most 70 and preferably at most 30.

6. Compositions as claimed in one or more of Claims 1 to 5, characterized in that the hemicellulose degradation products are present in a quantity of at least 25% by weight, based on the total weight of the thermosetting composition.

7. Compositions as claimed in one or more of Claims 1 to 6, characterized in that the hemicellulose degradation products are present in a quantity of at most 90% by weight.

8. Compositions as claimed in one or more of Claims 1 to 6, characterized in that they contain the hemicellulose degradation products in the form of aqueous solutions which have been obtained by thermal degradation of vegetable hemicellulose-containing raw materials and separation of the fibrous materials from the aqueous digestion solution.

9. Compositions as claimed in one or more of Claims 1 to 8, characterized in that they contain formaldehyde or paraformaldehyde as the aldehyde.

10. Compositions as claimed in one or more of Claims 1 to 8, characterized in that they contain furfurol as the aldehyde.

11. Compositions as claimed in one or more of Claims 1 to 10, characterized in that the aldehydes are present in a quantity of less than 20% by weight, but at least 5% by weight, based on the weight of the hemicellulose degradation products.

12. Compositions as claimed in one or more of Claims 1 to 10, characterized in that the aldehydes are present in a quantity of at most about 40% by weight, preferably at most about 35% by weight, based on the weight of the hemicellulose degradation products.

13. Compositions as claimed in one or more of Claims 1 to 12, characterized in that they additionally contain alkali in a quantity of up to 20% by weight, based on the thermosetting compositions.

14. The use of the compositions claimed in one or more of Claims 1 to 12 for glueing.

15. The use of the compositions claimed in Claims 1 to 13 for the impregnation of cellulose webs and for the production of moldings.

## Revendications

1. Masses aqueuses thermodurcissables à base de produits de condensation thermodurcissables connus en soi, contenant des aldehydes et des groupes OH et/NH$_2$, caractérisées par le fait qu'elles contiennent des produits de fission hémicellulosiques dont le degré moyen de polymérisation DP est compris entre 5 et 100, en une quantié d'au moins 10 % en poids par rapport au poids total des matières thermodurcissables ainsi que des aldéhydes en une quantité comprise entre 5 et 50 % en poids par rapport au poids des produits de fission hémicellulosiques.

2. Masses selon la revendication 1, caractérisées par le fait qu'elles contiennent, en tant que produits de fission hémicellulosiques, des produits de fission xylaniques.

3. Masses selon la revendication 1 ou 2, caractérisées par le fait qu'en tant que produits de fission hémicellulosiques, elles contiennent des produits de fission mannaniques.

4. Masses selon une ou plusieurs des revendications 1 à 3, caractérisées par le fait que le degré moyen de ppolymérisation DP est égal à au moins 10 et de préférence à au moins 15.

5. Masse selon une ou plusieurs des revendications 1 à 4, caractérisée par le fait que le degré de polymérisation moyen ne dépasse pas 70, de préférence ne dépassant pas 30.

6. Masse selon une ou plusieurs des revendications 1 à 5, caractérisée par le fait que la quantité présente de produits de fission hémicellulosiques est égale à au moins 25 % en poids par rapport au poids total des matières thermodurcissables.

7. Masse selon une ou plusieurs des revendications 1 à 6, caractérisée par le fait que la quantité présente de produits de fission hémicellulosiques ne dépasse pas 90 % en poids.

8. Masse selon une ou plusieurs des revendications 1 à 6, caractérisée par le fait qu'elle contient des produits de fission hémicellulosiques sous forme de solutions aqueuses qui sont obtenues par dégradation thermique de matières premières contenant de l'hémicellulose végétale et par séparation des matières fibreuses de la solution d'attaque aqueuse.

9. Masse selon une ou plusieurs des revendications 1 à 8, caractérisée par le fait qu'elle contient comme aldéhyde, du formaldéhyde ou du paraformaldéhyde.

10. Masse selon une ou plusieurs des revendications 1 à 8, caractérisée par le fait qu'elle contient comme aldéhyde du furfurol.

11. Masse selon une ou plusieurs des revendications 1 à 10, caractérisée par le fait que la teneur en aldéhydes présents est inférieure à 20 % en poids, toutefois non inférieure à 5 % en poids par rapport au poids des produits de fission hémicellulosiques.

12. Masse selon une ou plusieurs des revendications 1 à 10, caractérisée par le fait que la teneur en aldéhydes présents ne dépasse pas environ 40, de préférence ne dépasse pas environ 35 % en poids, par rapport au poids des produits de fission hémicellulosiques.

13. Masse selon une ou plusieurs des revendications 1 à 12, caractérisée par le fait qu'elle contient en outre un alcali en une teneur ne dépassant pas 20 % en poids par rapport aux matières thermodurcissables.

14. Utilisation pour le collage de masses selon une ou plusieurs des revendications 1 à 12.

15. Utilisation de masses selon les revendications 1 à 13, pour l'imprégnations de rails en cellulose et pour la fabrication de pièces moulées.

Fig. 1

≥ DP 26

Extinktion

Elutionsvolumen

0 096 733